# DEMANDE DE BREVET EUROPEEN

(11) **EP 2 253 506 A1**
(43) Date de publication de la demande: **24.11.2010**
(21) Numéro de dépôt: 09290822.7
(22) Date de dépôt: 27.10.2009
(51) Int. Cl.: B60N 2/70, B60N 2/72

(54) **Coussin de siège de véhicule automobile**

(30) Priorité: 13.05.2009 FR 0902322
(71) Demandeur: Centre d'étude et de recherche pour l'automobile (CERA), 51100 Reims (FR)
(72) Inventeur: Patte, Damien, 51490 Epoye (FR); Georges, Laurent, 08190 Roizy (FR)
(74) Mandataire: Sayettat, Julien Christian

(57) **Abrégé**

L'invention concerne un coussin (1) de siège de véhicule automobile, ledit coussin comprenant :
• un bloc (2) à base de mousse élastiquement compressible,
• un organe (3) d'accrochage dudit bloc solidairement à la structure du véhicule, ledit organe comprenant une partie d'ancrage (4) surmoulée par ladite mousse et au moins une partie d'accrochage (5) saillant dudit bloc, la dimension longitudinale (6) hors tout de ladite partie d'ancrage n'excédant pas 50% de la dimension longitudinale (7) hors tout dudit bloc,
• un patch (8) de renforcement de l'ancrage dudit organe, ledit patch étant à base d'une couche fibreuse surmoulée par ledit bloc, ladite couche étant imprégnée, dans au moins une fraction de son épaisseur, par ladite mousse, ledit organe s'étendant de part et d'autre d'un orifice (9) prévu dans ledit patch.

## Description

L'invention concerne un coussin de siège de véhicule automobile.

Il est connu de réaliser un coussin de siège de véhicule automobile, ledit coussin comprenant :
- un bloc à base de mousse élastiquement compressible,
- un organe d'accrochage dudit bloc solidairement à la structure du véhicule, ledit organe comprenant une partie d'ancrage surmoulée par ladite mousse et au moins une partie d'accrochage saillant dudit bloc, l'enveloppe de ladite partie d'ancrage correspondant sensiblement à celle dudit bloc vu de haut.

Généralement, la partie d'ancrage est sous forme d'un cadre en fil métallique épousant sensiblement la périphérie du bloc, l'intérieur dudit cadre étant traversé de fils métalliques soudés, la ou les parties d'accrochage étant par exemple réalisées par déformation localisée du fil métallique en boucle.

Du fait de la grande étendue de la partie d'ancrage, l'organe d'accrochage est fortement ancré dans la mousse, ce qui assure une grande longévité à l'accrochage du coussin.

Cependant, un tel coussin présente, du fait des dimensions importantes de la partie d'ancrage, et le cas échéant de sa géométrie complexe, un poids et un coût importants.

L'invention a pour but de pallier ces inconvénients.

A cet effet, l'invention propose un coussin de siège de véhicule automobile, ledit coussin comprenant :
- un bloc à base de mousse élastiquement compressible,
- un organe d'accrochage dudit bloc solidairement à la structure du véhicule, ledit organe comprenant une partie d'ancrage surmoulée par ladite mousse et au moins une partie d'accrochage saillant dudit bloc, la dimension longitudinale hors tout de ladite partie d'ancrage n'excédant pas 50% de la dimension longitudinale hors tout dudit bloc,
- un patch de renforcement de l'ancrage dudit organe, ledit patch étant à base d'une couche fibreuse surmoulée par ledit bloc, ladite couche étant imprégnée, dans au moins une fraction de son épaisseur, par ladite mousse, ledit organe s'étendant de part et d'autre d'un orifice prévu dans ledit patch.

Dans cette description, les termes de positionnement dans l'espace (haut, avant, longitudinal,...) sont pris en référence au coussin disposé dans le véhicule.

Le patch imprégné de mousse présente une résistance importante lui permettant de jouer son rôle de renforcement d'ancrage.

On peut ainsi utiliser un organe d'accrochage dont la partie d'ancrage est moins étendue que celle des réalisations connues, sa dimension longitudinale ne dépassant pas la moitié de celle du bloc, ledit organe étant de conception plus simple, comme on le verra après, avec un poids et des coûts diminués.

D'autres particularités et avantages de l'invention apparaîtront dans la description qui suit, faite en référence aux figures jointes dans lesquelles :
- la figure 1 est une représentation schématique partielle en coupe d'un coussin selon une première réalisation.
- la figure 2 est une représentation schématique en perspective d'un coussin selon une deuxième réalisation,

On décrit à présent un coussin 1 de siège de véhicule automobile, ledit coussin comprenant :
- un bloc 2 à base de mousse élastiquement compressible,
- un organe 3 d'accrochage dudit bloc solidairement à la structure du véhicule, ledit organe comprenant une partie d'ancrage 4 surmoulée par ladite mousse et au moins une partie d'accrochage 5 à ladite structure saillant dudit bloc, la dimension longitudinale 6 hors tout de ladite partie d'ancrage n'excédant pas 50% de la dimension longitudinale 7 hors tout dudit bloc,
- un patch 8 de renforcement de l'ancrage dudit organe, ledit patch étant à base d'une couche fibreuse surmoulée par ledit bloc, ladite couche étant imprégnée, dans au moins une fraction de son épaisseur, par ladite mousse, ledit organe s'étendant de part et d'autre d'un orifice 9 prévu dans ledit patch, ledit orifice formant ainsi frontière entre lesdites parties d'ancrage et d'accrochage.

Selon une réalisation, la couche fibreuse est à base de non tissé.

Selon une réalisation, la masse surfacique de la couche fibreuse est supérieure ou égale à 100 g/m².

Selon une réalisation, l'épaisseur de la couche fibreuse est comprise entre 1 et 2,5 mm.

Selon une réalisation, la fraction d'épaisseur imprégnée par la mousse représente au moins 30% de l'épaisseur de la couche fibreuse.

Selon une réalisation, le patch 8 présente une surface similaire - avec une variation indicative de plus ou moins 25% - à celle de l'enveloppe de la partie d'ancrage 4 vue de haut, afin de permettre un renforcement d'ancrage optimal.

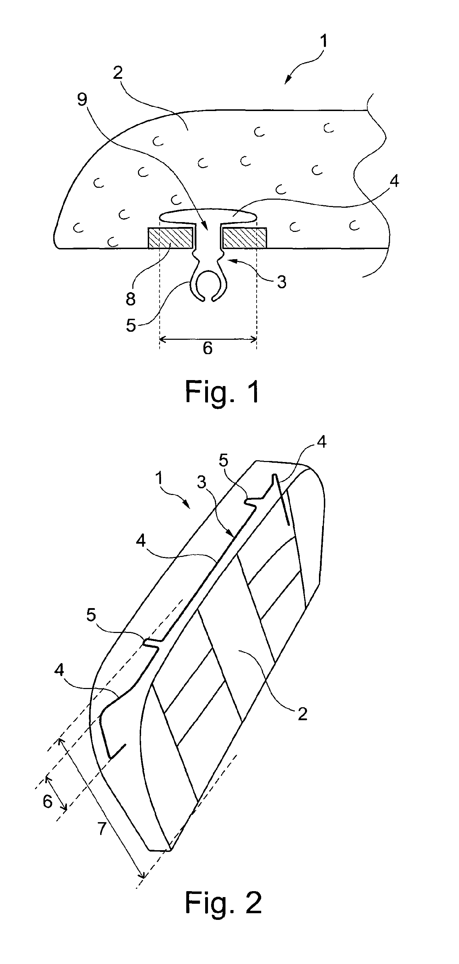

Selon la réalisation de la figure 1, l'organe 3 d'accrochage est à base de matériau plastique injecté, la partie d'ancrage 4 présentant ici la forme d'une collerette.

Selon la réalisation de la figure 2, l'organe 3 d'accrochage est à base de fil métallique replié. La partie d'ancrage 4 présente une forme générale de U dont la dimension longitudinale 6 hors tout n'excède pas 50% de la dimension longitudinale 7 hors tout dudit bloc. L'organe 3 est de réalisation simple, peu coûteux et de faible poids. L'organe 3 présente deux parties d'accrochage 5 en forme de boucles réalisées dans le fil métallique. L'enveloppe de la partie d'ancrage 4 vue de haut - dont on a fait mention plus haut - prend ici la forme d'un rectangle dans lequel s'inscrit le U.

De façon non représentée, le patch 8 peut prendre la forme d'une bande s'étendant en regard de la partie d'ancrage 4.

Il peut être envisagé de prévoir, en plus de l'organe 3 à base de fil métallique disposé notamment à l'avant du coussin 1, au moins un autre organe 3 en matière plastique moulée, disposé notamment à l'arrière dudit coussin.

## Revendications

1. Coussin (1) de siège de véhicule automobile, ledit coussin comprenant :
• un bloc (2) à base de mousse élastiquement compressible,
• un organe (3) d'accrochage dudit bloc solidairement à la structure du véhicule, ledit organe comprenant une partie d'ancrage (4) surmoulée par ladite mousse et au moins une partie d'accrochage (5) saillant dudit bloc, la dimension longitudinale (6) hors tout de ladite partie d'ancrage n'excédant pas 50% de la dimension longitudinale (7) hors tout dudit bloc,
• un patch (8) de renforcement de l'ancrage dudit organe, ledit patch étant à base d'une couche fibreuse surmoulée par ledit bloc, ladite couche étant imprégnée, dans au moins une fraction de son épaisseur, par ladite mousse, ledit organe s'étendant de part et d'autre d'un orifice (9) prévu dans ledit patch.

2. Coussin selon la revendication 1, **caractérisé en ce que** la couche fibreuse est à base de non tissé.

3. Coussin selon l'une quelconque des revendications 1 ou 2, **caractérisé en ce que** la masse surfacique de la couche fibreuse est supérieure ou égale à 100 g/m².

4. Coussin selon l'une quelconque des revendications 1 à 3, **caractérisé en ce que** l'épaisseur de la couche fibreuse est comprise entre 1 et 2,5 mm.

5. Coussin selon l'une quelconque des revendications 1 à 4, **caractérisé en ce que** la fraction d'épaisseur imprégnée par la mousse représente au moins 30% de l'épaisseur de la couche fibreuse.

6. Coussin selon l'une quelconque des revendications 1 à 5, **caractérisé en ce que** le patch (8) présente une surface similaire à celle de l'enveloppe de la partie d'ancrage (4) vue de haut.

7. Coussin selon l'une quelconque des revendications 1 à 6, **caractérisé en ce que** l'organe (3) d'accrochage est à base de matériau plastique injecté.

8. Coussin selon la revendication 7, **caractérisé en ce que** la partie d'ancrage (4) est sous forme d'une collerette.

9. Coussin selon l'une quelconque des revendications 1 à 6, **caractérisé en ce que** l'organe (3) d'accrochage est à base de fil métallique replié.
